# EUROPEAN PATENT APPLICATION

(11) **EP 1 860 874 A2**
(43) Date of publication of application: **28.11.2007**
(21) Application number: 07102591.0
(22) Date of filing: 16.02.2007
(51) Int. Cl.: H04N 5/44

(54) **Method for providing video source list and video apparatus**

(30) Priority: 22.05.2006 KR 20060045686
(71) Applicant: Samsung Electronics Co., Ltd., Suwon-si 442-742 Gyeonggi-do (KR)
(72) Inventor: Lee, Sang-hee, Seodaemun-gu Seoul (KR); Kim, Dae-gu, Seoul (KR); Yim, Jin-ho, Suwon-si Gyeonggi-do (KR); Lee, Dong-heon, Seoul (KR); Kim, Won-il, Chungcheongbuk-do (KR)
(74) Representative: Perkins, Dawn Elizabeth

(57) **Abstract**

A method for providing a video source list and a video apparatus are provided. The video apparatus comprises a combiner which combines an external input list with a video to be displayed, the external input list including information regarding external inputs of the video apparatus and a controller which generates the external input list, and controls the combiner, wherein the controller selectively changes a display order in which the information regarding external inputs is arranged in the external input list. Accordingly, it is possible to change the order in which the information regarding external inputs arranged on the external input list is displayed according to the desires of a user, and thus, the user can choose external inputs more rapidly and conveniently.

## Description

Apparatuses and methods consistent with the present invention relate to providing a video source list, and more particularly, to providing a video source list wherein an order in which information regarding video sources is arranged in the video source list can be changed.

Recently, the capabilities of video apparatuses have become increasingly diverse and complex, and video apparatuses may be connected to various external apparatuses. Accordingly, as the number of external inputs, that is, video sources, increases, the external input list provided to a user through the screen becomes longer.

If the external input list becomes longer, a user may feel some inconvenience when selecting a desired external input because this requires frequently inputting information, and takes a significant amount of time.

Therefore, there is a need for methods for the user to choose external inputs more rapidly and conveniently.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for providing a video source list and a video apparatus, wherein the order in which information regarding video sources is arranged in the video source list can be changed according to the desires of the user, thus providing the user with the ability to choose the video source more rapidly and conveniently.

In one exemplary embodiment of the present invention, there is provided a video apparatus comprising a combiner, which combines a previously prepared external input list with a video to be displayed, and a controller, which prepares the external input list wherein the order in which the information regarding external inputs is displayed can be changed, and controls the combiner.

The controller selects the order in which the information regarding external inputs is displayed based on at least one of the inherent name of an external input terminal which receives the input from an external apparatus, the number given to the external input terminal, the name given to the external input terminal, and information on whether the external apparatus is connected to the external input terminal.

Additionally, the controller selects the display order so that the information regarding external inputs received through the external input terminal connected to the external apparatus takes precedence in the display order over the information regarding external inputs received through the external input terminal not connected to the external apparatus.

The information regarding external inputs may be either the inherent name of the external input terminal receiving the input from the external apparatus, or the name given to the external input terminal.

According to another aspect of the prevent invention, there is provided a method for providing a list comprising preparing an external input list wherein the order in which the information regarding external inputs is arranged in the external input list can be changed, and combining the prepared external input list with the video to be displayed.

Preparing the external input list comprises selecting the order in which the information regarding external inputs is displayed based on at least one of the inherent name of an external input terminal receiving the input from an external apparatus, the number given to the external input terminal, the name given to the external input terminal, and information on whether the external apparatus is connected to the external input terminal.

Furthermore, preparing the external input list comprises selecting the display order so that the information regarding external inputs received through the external input terminal connected to the external apparatus takes precedence in the display order over the information regarding external inputs received through the external input terminal not connected to the external apparatus.

The information regarding external inputs may be either the inherent name of the external input terminal receiving the input from the external apparatus, or the name given to the external input terminal.

According to another aspect of the prevent invention, there is provided a video apparatus comprising a combiner which combines the video source list with a video to be displayed, and a controller which prepares a video source list wherein the order in which information regarding video sources is arranged in the video source list can be changed, and controls the combiner.

The video source comprises at least one of an internal input provided from internal video sources in the video apparatus, and an external input received through an external apparatus connected to an external input terminal in the video apparatus.

The controller selects the display order so that the information regarding internal inputs takes precedence in the display order over the information regarding external inputs.

Furthermore, the controller selects the order in which the information regarding external inputs is displayed, based on at least one of the inherent name of the external input terminal receiving the input from the external apparatus, the number given to the external input terminal, the name given to the external input terminal, and information on whether the external apparatus is connected to the external input terminal.

According to another aspect of the prevent invention, there is provided a method for providing a list comprises preparing a video source list wherein the order in which information regarding video sources is arranged in the video source list can be changed, and combining the prepared video source list with the video to be displayed.

The video source comprises at least one of an internal input provided from internal video sources in the video apparatus, and an external input received through an external apparatus connected to an external input terminal in the video apparatus.

Preparing the video source list comprises selecting the display order so that the information regarding internal inputs takes precedence in the display order over the information regarding external inputs.

Furthermore, preparing the video source list comprises selecting the order in which the information regarding external inputs is displayed, based on at least one of the inherent name of the external input terminal receiving the input from the external apparatus, the number given to the external input terminal, the name given to the external input terminal, and information on whether the external apparatus is connected to the external input terminal.

The above and/or other aspects of the present invention will be more apparent by describing certain exemplary embodiments of the present invention with reference to the accompanying drawings, in which:
Figure 1 is a block diagram of a video apparatus according to an exemplary embodiment of the present invention;
Figure 2 is a view illustrating an example of an external input information table;
Figure 3 is a flowchart illustrating a method for providing an external input list according to an exemplary embodiment of the present invention;
Figures 4A and 4B are exemplary views illustrating the method for providing the external input list in detail;
Figure 5 is an exemplary view illustrating a method for providing a video source list in detail;
Figure 6 is a block diagram of a video apparatus according to another exemplary embodiment of the present invention; and
Figure 7 is a flowchart illustrating a method of the video apparatus of Figure 6 for providing an external input list according to an exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

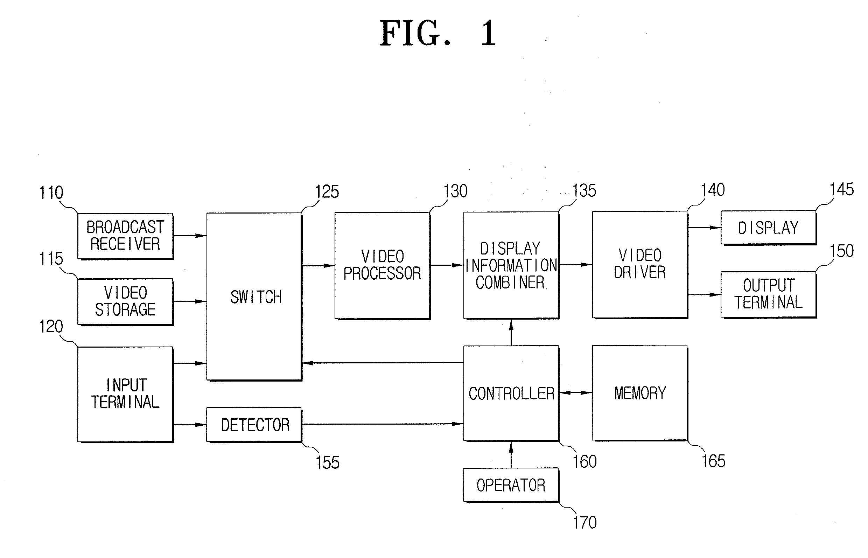

Figure 1 is a block diagram of a video apparatus according to an exemplary embodiment of the present invention. The video apparatus according to the exemplary embodiment of the present invention displays an external input list on a screen, to which a user can refer. In this case, the order in which information regarding external inputs arranged on the external input list is displayed is determined in accordance with preset arrangement criteria. Then, if the user changes the arrangement criteria, the order in which the information regarding external inputs is displayed can be changed in accordance with the arrangement criteria changed by the user.

As shown in Figure 1, the video apparatus comprises a broadcast receiver 110, a video storage 115, an input terminal 120, a switch 125, a video processor 130, a display information combiner 135, a video driver 140, a display 145, an output terminal 150, a detector 155, a controller 160, a memory 165 and an operator 170.

The broadcast receiver 110 tunes into a television (TV) broadcast and demodulates signals of the broadcast. The video storage 115 stores a video or reads a stored video. In the video storage 115, various recording media may be used as a means for storing the video, one example thereof being a hard disk drive (HDD).

The input terminal 120 includes several kinds of input terminals. Specifically, the input terminal 120 may include a composite input terminal, a component input terminal, an S-video input terminal, a high definition multimedia interface (HDMI) input terminal, a universal serial bus (USB) input terminal and an IEEE 1394 input terminal. There may be a plurality of any kind of input terminal, so, for example, the input terminal 120 may include two composite input terminals and two component input terminals.

Furthermore, the input terminal 120 may include a wireless input terminal in addition to a cable input terminal. One example of the wireless input terminal is a Bluetooth communication module, which receives an external input from a Bluetooth apparatus.

Moreover, a multi-memory slot can be included as an input terminal in the input terminal 120. The multi-memory slot is an input terminal which receives data from a mounted memory card.

The switch 125 switches between outputs of the broadcast receiver 110, the video storage 115 and the input terminal 120 so as to send the selected output to the video processor 130. The switching operation of the switch 125 is controlled by the controller 160.

The video processor 130 processes the video selected by the switch 125 so that it can be displayed.

The display information combiner 135 combines display information such as characters, symbols, figures and graphics with the video output from the video processor 130 and outputs the result to the video driver 140. In this case, the display information combiner 135 can combine the display information by using an on screen display (OSD) method. The combining operation of the display information combiner 135 is controlled by the controller 160.

The video driver 140 displays the video combined with the display information output from the display information combiner 135 on the display 145, or transmits the output from the display information combiner 135 to an external apparatus connected through the output terminal 150.

The detector 155 detects the external apparatus is connected to the input terminals included in the input terminal 120, and reports the detection result to the controller 160. For example, in the case of an USB apparatus connected to the USB input terminal included in the input terminal 120, the detector 155 detects the connection and reports the result, for example, "the USB apparatus is connected to the USB input terminal," to the controller 160.

The controller 160 controls the operation of the video apparatus according to the operating commands of a user. The operating commands are input through the operator 170. In particular, the controller 160 prepares an external input list by referring to preset "arrangement information," "arrangement criteria" and "external input information table" stored in the memory 165. Furthermore, the controller 160 controls the display information combiner 135 to display the prepared external input list on the screen.

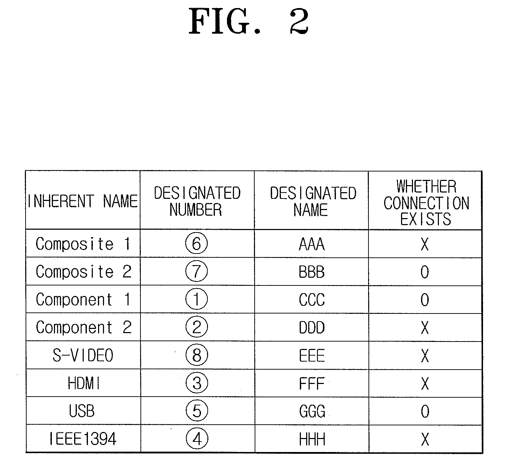

Figure 2 shows an example of the "external input information table" on a database listing (i) the inherent name of an input terminal receiving input from an external apparatus, (ii) the designated number given to the input terminal, (iii) the designated name given to the input terminal and (iv) information on whether the external apparatus is connected to the input terminal.

The designated number (ii) and designated name (iii) are provided by the user. The controller 160 determines (iv) whether the external apparatus is connected to the external input terminal by referring to the result of detecting by the detector 155.

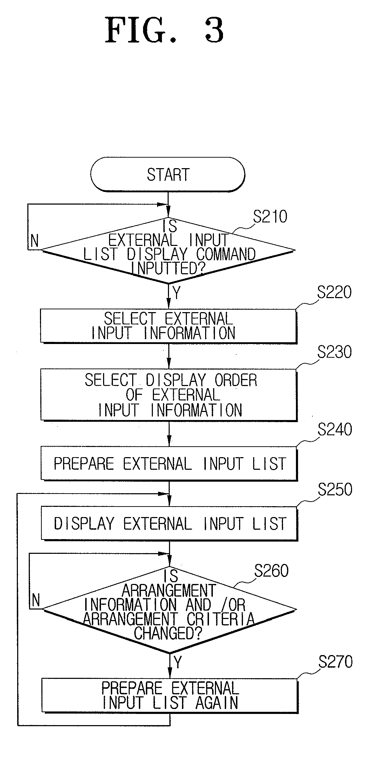

Hereinafter, a process for providing an external input list will be described in more detail with reference to Figure 3. Figure 3 is a flowchart explaining a method for providing an external input list according to an exemplary embodiment of the present invention.

"Arrangement information" means external input information to be arranged on the external input list. Arrangement information may be set to (i) the inherent name or (ii) the designated name. If the arrangement information is set to the inherent name, inherent names are arranged on the external input list, and if the arrangement information is set to the designated name, designated names are arranged on the external input list.

"Arrangement criteria" is a standard for selecting the order in which external input information arranged on the external input list is displayed. The arrangement criteria can be set to (i) the designated number, (ii) the designated name or (iii) whether connection exists.

Furthermore, the arrangement criteria can be set in two or more operations. In other words, it is possible that the first and second arrangement criteria can be set to "whether connection exists" and to "the designated number," respectively. In the display order, external input information having the lowest designated number among external inputs in which whether connection exists is set as "O" comes first, and external input information having the highest designated number among external inputs in which whether connection exists is set as "X" is the last.

As shown in Figure 3, if "external input list display command" is input to the operator 170 by the user (S210-Y), the controller 160 selects external input information to be arranged on the external input list by referring to the preset arrangement information (S220).

Furthermore, the controller 160 selects the order in which external input information to be arranged on the external input list is displayed by referring to the previously stored external input information table and to the preset arrangement criteria (S230).

The controller 160 then prepares the external input list (S240) with the selected external input information arranged according to the selected display order.

In addition, the controller 160 controls the display information combiner 135 so that the prepared external input list is displayed on the screen (S250).

If the user changes the arrangement information and/or arrangement criteria through the operator 170 (5260-Y), the controller 160 again prepares the external input list in response to the changed arrangement information and/or arrangement criteria (S270), and then displays the list on the screen again (S250).

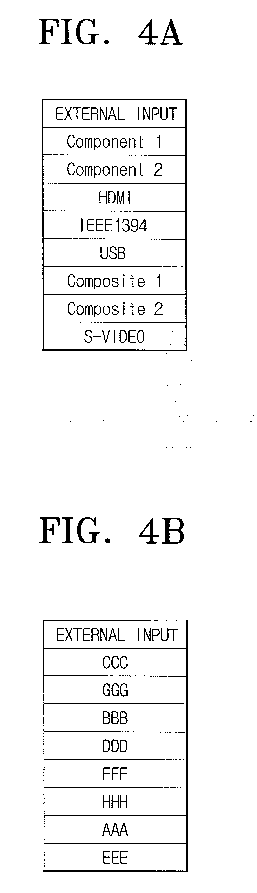

Figures 4A and 4B are examples of the external input list which is prepared when the arrangement information and arrangement criteria are set to "inherent name" and "designated number," respectively. An example of the external input information table is shown in Figure 2.

Referring to the external input list shown in Figure 4A, it can be seen that the inherent name "Component 1" of the external input, which has the lowest designated number, is first in the display order, and the inherent name "S-VIDEO" of the external input, which has the highest designated number, is last in the display order.

Additionally, Figure 4B illustrates an example of the external input list which is prepared when arrangement information, the first arrangement criteria and the second arrangement criteria are set to "designated name," "whether connection exists" and "designated number," respectively. The external input information table is shown in Figure 2.

By referring to the external input list shown in Figure 4B, it can be seen that the designated name CCC of the external input having the lowest designated number among external inputs in which whether connection exists is set as "O" is first in the display order, and the designated name EEE of the external input having the highest designated number among external inputs in which whether connection exists is set as "X" is last in the display order.

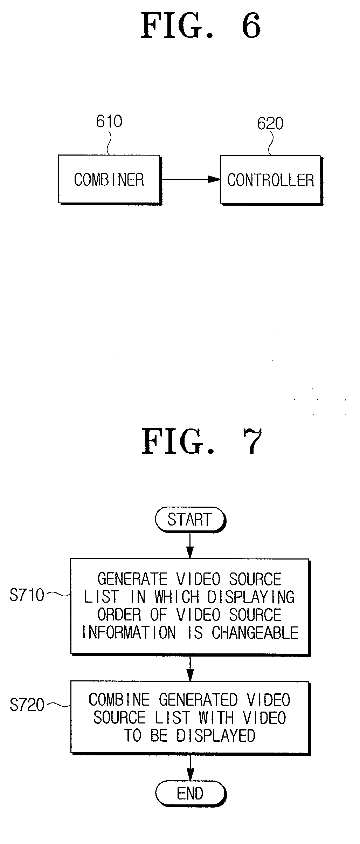

Another exemplary embodiment of the present invention will be described below with reference to Figures 6 and 7. Figure 6 is a block diagram of a video apparatus according to another exemplary embodiment of the present invention, and Figure 7 is a flowchart illustrating a method of the video apparatus of Figure 6 for providing an external input list according to an exemplary embodiment of the present invention.

Referring to Figure 6, the video apparatus according to another exemplary embodiment of the present invention includes a combiner 610 and a controller 620. The combiner 610 combines a video to be displayed with information, and the controller 620 generates an external input list in which display order of external input information is changeable, and controls the combiner 610 to combine the generated external input list with the video to be displayed.

More specifically, as shown in Figure 7, when the controller 620 generates a video source list, in which the display order of video source information is changeable (S710), the combiner 610 combines the generated video source list with the video to be displayed (S720).

The process for displaying the external input information list has now been described in detail using the exemplary embodiments.

In the exemplary embodiment according to the present invention, the list wherein information regarding external inputs is arranged was described as the displayed list, but the present invention is not limited thereto. For example, the present invention can be applied in the case of providing a video source list, in which internal input information is arranged along with external input information, as well as the video source list, in which external input information is arranged.

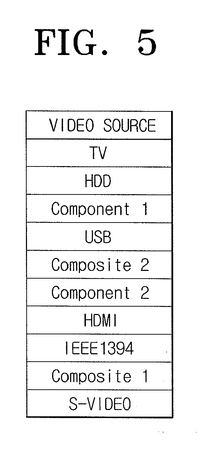

Figure 5 illustrates an example of a video source list in which internal input information is arranged along with external input information. The video source providing the internal input is a module which is included in the inside of the video apparatus, and which provides a video in the same manner as the broadcast receiver 110 and the video storage 115, as shown in Figure 2. Naturally, the video source list can also change the display order of the video source information (external input information) according to the arrangement criteria.

It is possible that the order in which the internal input information (TV, HDD) on the video source list is displayed takes precedence over the order in which the external input information (Component 1, USB, ... S-VIDEO) is displayed. Since the internal input may be used as the video source more frequently than the external input, the display order of the internal input may take precedence over that of the external input in order to be selected by the user easily. However, this should not be considered as limiting, and the display order thereof may be changed.

As the video apparatus shown in Figure 2 is only an exemplary embodiment, not all blocks shown in Figure 2 need to be included in the video apparatus providing the video source list, and unnecessary blocks can be omitted. For example, when the video apparatus is a set-top box, the display 145 may be omitted.

According to the present invention as described above, the order in which the information regarding video sources arranged on the video source list is displayed can be changed according to the desire of the user. Therefore, although the video source list becomes longer, the user can choose video sources more rapidly and conveniently.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A video apparatus comprising:
a combiner (135) configured to combine a video source list with video data to be displayed, wherein the video source list includes information regarding video sources of the video apparatus; and
a controller (160) configured to generate the video source list, and control the combiner (135), wherein the controller (160) is configured to selectively change a display order in which the information regarding the video sources is arranged in the video source list.

2. The apparatus as claimed in claim 1, wherein the video sources comprise external inputs received through external input terminals (120) from external apparatuses.

3. The apparatus as claimed in claim 1, wherein the video sources comprise at least one of an internal input provided from an internal video source in the video apparatus, and an external input received from an external apparatus connected to an external input terminal (120) of the video apparatus.

4. The apparatus as claimed in claim 3, wherein the controller (160) is configured to select the display order so that the information regarding internal inputs takes precedence over the information regarding external inputs.

5. The apparatus as claimed in any one of claims 2 to 4, wherein the controller (160) is configured to select the display order of the information regarding external inputs based on at least one of an inherent name of the external input terminal (120) receiving the input from the external apparatus, a number assigned to the external input terminal (120), a name assigned to the external input terminal (120), and information on whether the external apparatus is connected to the external input terminal.

6. The apparatus as claimed in claim 5, wherein the controller (135) is configured to select the display order so that the information regarding external inputs received through the external input terminal connected to the external apparatus takes precedence over the information regarding external inputs received through the external input terminal not connected to the external apparatus.

7. The apparatus as claimed in any one of claims 2 to 6, wherein the information regarding external inputs is one of an inherent name of the external input terminal (120) receiving an input from an external apparatus, or a name assigned to the external input terminal (120).

8. A method for providing a list, the method comprising:
generating a video source list including information regarding video sources which is arranged in a display order which is selectively changed; and
combining the video source list with video data to be displayed.

9. The method as claimed in claim 8, comprising detecting external inputs from external video sources at a plurality of external input terminals and generating information regarding the external video sources.

10. The method as claimed in claim 8 or 9, wherein the video sources comprise at least one of an internal input provided from internal video sources in the video apparatus, and an external input received from an external apparatus connected to an external input terminal of the video apparatus.

11. The method as claimed in claim 10, wherein the generating the video source list comprises selecting the display order so that the information regarding internal inputs takes precedence over the information regarding external inputs.

12. The method as claimed in claim 10 or 11, wherein the generating the video source list comprises selecting the display order of the information regarding external inputs, based on at least one of an inherent name of the external input terminal receiving the input from the external apparatus, a number assigned to the external input terminal, a name assigned to the external input terminal, and information on whether the external apparatus is connected to the external input terminal.

13. The method as claimed in claim 12, wherein the generating the external input list comprises selecting the display order so that the information regarding external inputs received through the external input terminal connected to the external apparatus takes precedence over the information regarding the external inputs received through the external input terminal not connected to the external apparatus.

14. The method as claimed in any one of claims 9 to 13, wherein the information regarding external inputs is one of an inherent name of an external input terminal receiving an input from an external apparatus, or a name assigned to the external input terminal.
